# EUROPEAN PATENT SPECIFICATION

(11) **EP 4 116 099 B1**
(45) Date of publication and mention of the grant of the patent: **04.12.2024**
(21) Application number: 20923412.9
(22) Date of filing: 07.12.2020
(51) Int. Cl.: B41J 2/01, B41J 3/407, B41J 29/38, B65D 25/20, G06F 3/12, B65D 17/28

(54) **CAN BODY PRINTING SYSTEM**
SYSTEM ZUM BEDRUCKEN EINES DOSENKÖRPERS
SYSTÈME D'IMPRESSION DE CORPS DE CANETTE

(30) Priority: 05.03.2020 JP 2020037433
(43) Date of publication of application: 11.01.2023
(73) Proprietor: ALTEMIRA Co., Ltd., Tokyo 112-8525 (JP)
(72) Inventor: OJIMA, Shinichi, Tokyo 1128525 (JP); MATSUSHIMA, Hitomi, Tokyo 1128525 (JP); FUJINUMA, Kenji, Tokyo 1128525 (JP)
(74) Representative: Strehl Schübel-Hopf & Partner
(86) International application number: PCT/JP2020/045406
(87) International publication number: WO 2021/176789

(56) References cited:
- WO-A1-2018/033627
- JP-A- 2006 248 600
- JP-A- 2007 041 990
- JP-A- 2008 183 613
- JP-A- 2019 025 521
- JP-A- 2019 108 138
- JP-A- H06 156 503
- JP-A- H09 226 776
- US-A1- 2006 277 957
- US-A1- 2018 178 579

## Description

### Technical Field

The present invention relates to a can body printing device, a can body printing system, a can body, and a can body filled with a beverage.

### Background Art

Patent Document 1 discloses a technique related to a component monitoring device that detects use of a component other than regular components and then restricts operations of an operating machine. Conventional can body printing systems are known from Patent Documents 2 and 3.

### Citation List

### Patent Literature

Patent Document 1: Japanese Patent Application Laid-Open Publication No. 2013-101686
Patent Document 2: US 2006/277957 A1
Patent Document 3: JP 2019 025521 A

### Summary of Invention

### Technical Problem

With recent advances in printing technology for can bodies, performing printing on can bodies on the user side, which has conventionally been impossible, is under consideration.

Here, the can body is usually subjected to processing of partial deformation, but there are some cases in which printing is desired even on a portion where the deformation processing is applied.

However, it is generally difficult for the user side to perform the processing of deformation of part of the can body. Consequently, in the case in which the user side performs printing on the portion where the deformation processing is applied, the printing is performed after deformation. In such cases, it is sometimes impossible to obtain the intended print quality because part of the print surface of the can body is bent.

An object of the present invention is to provide a can body in which print quality is kept better as compared to the case where printing is only performed after processing of deforming part of a print surface of a can body. Solution to Problem

The invention is defined in the appended claims.

### Advantageous Effects of Invention

According to the present invention, it is possible to provide a can body in which print quality is kept better as compared to the case where printing is only performed after processing of deforming part of a print surface of a can body.

### Brief Description of Drawings

FIG. 1 is a diagram showing a hardware configuration of a can body printing system to which an exemplary embodiment is applied;
FIG. 2 is a diagram showing a functional configuration of a host device in the exemplary embodiment;
FIG. 3 is a diagram showing a functional configuration of a manufacturer-side device in the exemplary embodiment;
FIG. 4 is a diagram showing a functional configuration on the printing device side in the exemplary embodiment;
FIGS. 5A to 5C are flowcharts each showing processing performed by the host device;
FIG. 6 is a flowchart showing processing in the exemplary embodiment, which is performed on the manufacturer-side device;
FIG. 7 is a flowchart showing processing in the exemplary embodiment, which is performed on the printing device side;
FIGS. 8A to 8C are diagrams each showing an example of a can body to which the exemplary embodiment is applied; and
FIG. 9 is a diagram showing an example in which printing is performed onto a can body after being filled with a beverage.

### Description of Embodiments

### [Configuration of can body printing system]

Hereinafter, with reference to attached drawings, a can body printing system, to which an exemplary embodiment is applied, will be described in detail.

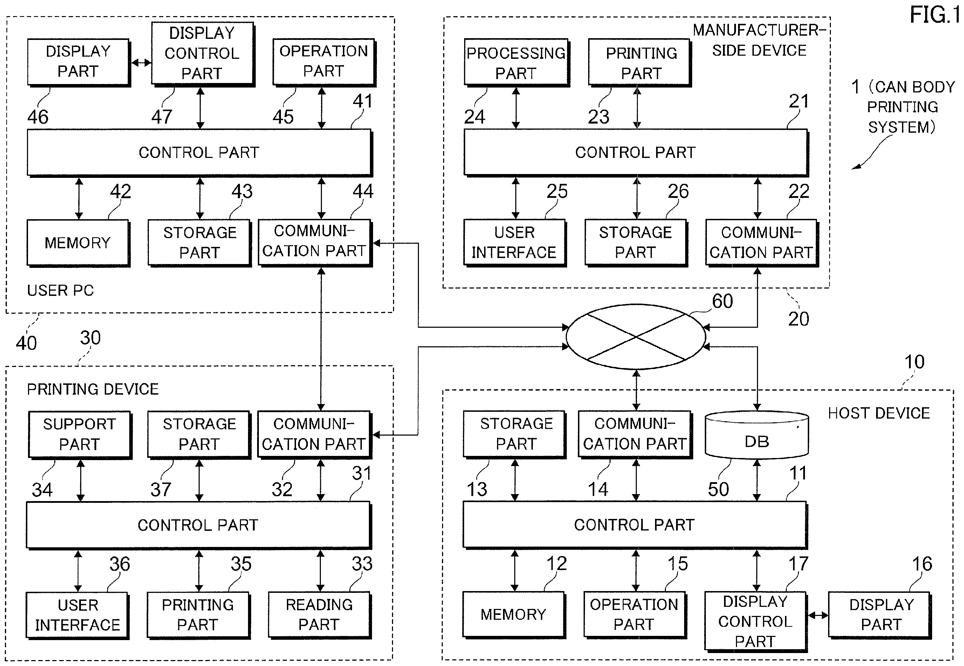

FIG. 1 is a diagram showing a hardware configuration of a can body printing system 1 to which the exemplary embodiments are applied. The can body printing system 1 includes devices on the can body manufacturer side, and devices on the user side.

The devices on the can body manufacturer side include a host device 10, which is an information processing device forming the basis of the can body printing system 1. In addition, the can body manufacturer includes a manufacturer-side device 20 as a first printing unit that performs printing and processing onto a predetermined location of a can body before being provided to a user. Note that, in the exemplary embodiment, a diameter decreased portion is adopted as the "predetermined location" of a can body. The "diameter decreased portion" is a portion near the opening portion of the can body, to which the so-called necking processing is applied to decrease the diameter of the opening portion.

The devices on the user side include a printing device 30 as a second printing unit that performs printing onto a provided can body for a user who has been provided with the can body from the can body manufacturer. A user PC 40, which is a computer device operated by the user, is also included. The host device 10, the manufacturer-side device 20, the printing device 30, and the user PC 40 are connected via a network 60, such as the Internet.

Note that there is a mode in which the can body manufacturer also serves as a printing device manufacturer who provides the printing device 30 to a user, and a mode in which the can body manufacturer does not serve as the printing device manufacturer.

In the exemplary embodiment, the host device 10 is a computer device provided by a can body manufacturer who provides can bodies to a user. To the host device 10, a database (DB) 50 that stores the various pieces of information used by the can body printing system 1 is connected directly or via the network 60.

The host device 10 includes a control part 11, which is a central processing unit (CPU) controlling the entire device, and a memory 12, such as a random access memory (RAM) used as a working area for computing. In addition, a storage part 13 used for storing programs and various kinds of setting data is also included. As the storage part 13, for example, a storage device, such as a semiconductor memory or a hard disk drive (HDD) is used. Further, a communication part 14 that transmits and receives data via the network 60 is also included.

Moreover, the host device 10 also includes an operation part 15, such as a keyboard, a pointing device, and a touch panel, to accept input operations from an administrator managing the can body printing system 1. In addition, a display part 16 including a liquid crystal display, etc., which displays images and text information necessary for administrative work conducted by the administrator, and a display control part 17 controlling the display part 16 are also included. Note that each piece of hardware does not necessarily have a common housing.

The manufacturer-side device 20 includes a control part 21 controlling the entire device, and a communication part 22 that transmits and receives various kinds of data via the network 60. The manufacturer-side device 20 also includes a printing part 23 that performs printing on a can body, and a processing part 24 that performs processing on the printed can body. Moreover, a user interface 25 that performs display to an operator of the manufacturer-side device 20 and accepts input operations from the operator, and a storage part 26 that stores print image information or the like, which has been obtained, are also included. The can body as a medium, on which printing is performed by the manufacturer-side device 20, is a straight-shaped can body before the necking processing is applied, for example.

There is a mode in which the host device 10 on the can body manufacturer side is directly connected to the manufacturer-side device 20 via an interface cable, or a mode in which the host device 10 and the manufacturer-side device 20 are connected to each other via a local area network (LAN) such as Ethernet (registered trademark).

The printing device 30 includes a control part 31 controlling the entire device, and a communication part 32 that transmits and receives various kinds of data via the network 60. The printing device 30 also includes a reading part 33 configured by a charge coupled device (CCD) sensor and the like for reading identification information in the case of the mode in which the identification information is printed on the diameter decreased portion on the can body manufacturer side. The printing device 30 also includes a support part 34 as one of support units that support a can body on which printing is to be performed, and a printing part 35 that performs printing on the barrel portion of the can body supported by the support part 34. Moreover, the printing device 30 includes a user interface 36 that performs display to the user who operates the printing device 30 and accepts input operations from the user. In addition, a storage part 37 that stores print image information and so on obtained from the can body manufacturer side or generated on the user side is included.

Here, the can body as a medium on which printing is performed by the printing device 30 is a can body whose diameter decreased portion is subjected to printing and thereafter subjected to necking processing on the can body manufacturer side. Note that the medium on which printing is performed can be the can body before being filled with beer or other beverages, or the can body after being filled with the beverage.

The printing device 30 itself can be grasped as the "can body printing device" in some cases, but it is also possible to inclusively grasp the printing device 30 and the user PC 40 as the "can body printing device."

For the can body, for example, to be conveyed to the support part 34 for printing by the printing part 35, the reading part 33 rotates the can body, for example, around the axial direction thereof during the conveyance to read the identification information formed on the surface of the can body. Examples of the identification information read by the reading part 33 include various kinds of bar code information, serial numbers, and various kinds of image information that can be identified. Note that there is also a mode in which the reading part 33 adopts a configuration that emits ultraviolet light, which is light rays with predetermined wavelength, and then visualizes and reads the identification information drawn with fluorescent paint, to thereby make a user who bought the can body be not aware of existence of the identification information on the can body.

When the can body that was subjected to printing and processing on the diameter decreased portion thereof is conveyed, the support part 34 supports the can body so that printing by the printing part 35 is available. Specifically, since it is necessary to support the can body with the diameter decreased portion subjected to the necking processing, for example, a cylindrical mandrel is inserted from the opening portion toward the inside of the can body, and the mandrel swells inside the can body to support thereof from the inside. Then, the mandrel is rotated in the circumferential direction, to thereby rotate the can body in the circumferential direction at the nozzle position of the inkjet. In addition, there is also a mode in which, for example, the can body is supported by holding a top and bottom portions of the can body by the mandrel and a pressing part, and the can body is rotated in the circumferential direction at the nozzle position of the inkjet. When printing is performed onto a can body filled with a beverage, the can body cannot be supported from the inside thereof; accordingly, there is a mode in which, for example, the can body is supported by holding the top and bottom portions of the can body by plural pressing parts.

The printing part 35 is capable of performing digital printing on the barrel portion of the can body supported by the support part 34, and is also capable of printing with different print contents for each can body. This is very different from printing on the can body by the normal mechanical printing, increases convenience for the person performing printing on the can body, and reduces the weight of the device. In the printing part 35, the ink is injected as droplets from a nozzle and adheres to an outer circumferential surface of the can body to form an image on the outer circumferential surface of the can body, and further, the paint is applied onto the image to form a protection layer. The printing part 35 uses, for example, inks of four colors: cyan (C); magenta (M); yellow (Y); and black (K) as the basic inks, and special color inks (special-color inks) prepared for each brand as needed. In addition, in this case, the inkjet head is prepared for each color, to thereby perform image formation onto the can body by use of the plural inkjet heads. Moreover, as the ink to be used, an actinic radiation cure ink is desirable. Here, examples of the actinic radiation cure ink include an ultraviolet (UV) cure ink. After the image formation by the inkjet heads, a paint is applied to the outer circumferential surface of the can body to form the protection layer (overcoat layer).

The user PC 40 includes a control part 41 controlling the entire device, and a memory 42, such as a RAM used as a working area for computing. In addition, a storage part 43 used for storing programs and various kinds of setting data is also included, the storage part 43 including a storage device, such as a semiconductor memory or an HDD. Further, a communication part 44 that transmits and receives data via the network 60 or transmits and receives data by connecting to the printing device 30 is included. Moreover, an operation part 45, such as a keyboard, a pointing device, and a touch panel, to accept input operations from a user who operates the printing device 30 is also included. In addition, a display part 46 configured with a liquid crystal display, etc., that displays images and text information necessary for print work conducted by the user by use of the printing device 30, and a display control part 47 controlling the display part 46 are also included.

The user PC 40 obtains various kinds of information from the host device 10. For this reason, in addition to the mode of communicating directly with the host device 10, the communication part 32 of the printing device 30 has a mode to communicate with the host device 10 via the user PC 40. Moreover, there is also a mode to selectively use the above modes in accordance with information.

There is a mode in which the printing device 30 on the user side is directly connected to the user PC 40 via an interface cable, or a mode in which the printing device 30 and the user PC 40 are connected to each other via a LAN such as Ethernet (registered trademark).

### [Functional configuration of host device 10 in exemplary embodiment]

Next, a description will be given of the functions in the exemplary embodiment performed by the host device 10.

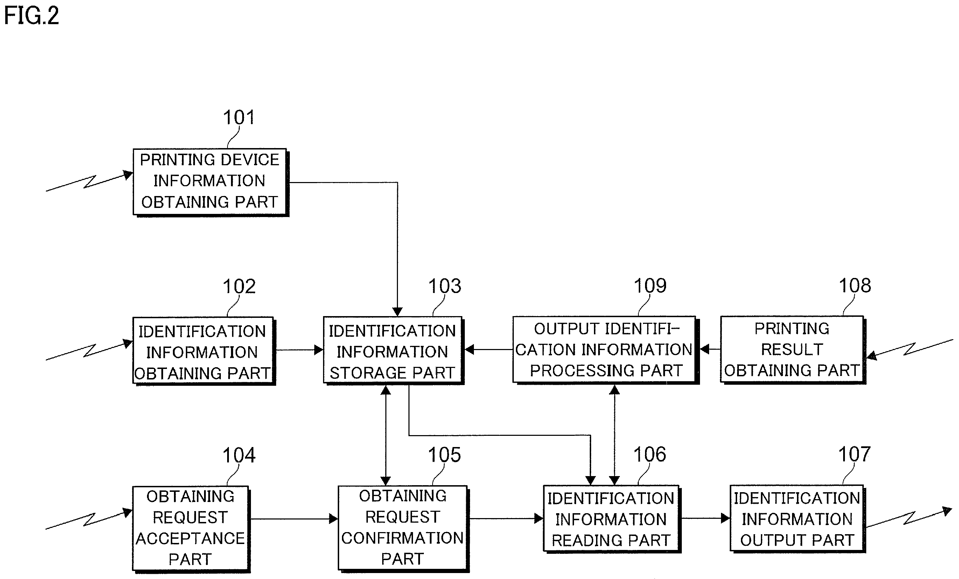

FIG. 2 is a diagram showing a functional configuration of the host device 10 in the exemplary embodiment. The host device 10 includes a printing device information obtaining part 101 that obtains, for example, printing device information from other computer devices via the network 60. In addition, since there is also a mode to print the identification information on the can body, the host device 10 includes an identification information obtaining part 102 that obtains, for example, the identification information from other computer devices via the network 60. In addition, an identification information storage part 103 that stores can body identification information associating the obtained printing device information and identification information with each other in the storage part 13 or the database 50 is also included.

Other than the case where the printing device information and the identification information are obtained via the network 60 and the communication part 14, there is a mode in which, for example, the printing device information and the identification information are inputted through the operation part 15 by an administrator of the host device 10.

The host device 10 also includes an obtaining request acceptance part 104 that accepts an obtaining request when the printing device 30 issues the obtaining request for the identification information. In addition, the host device 10 includes an obtaining request confirmation part 105 that, based on the printing device information stored in the identification information storage part 103, confirms whether or not the accepted obtaining request is made by the printing device 30 that has been registered. Further, an identification information reading part 106 that reads the identification information out of the identification information storage part 103, and an identification information output part 107 that outputs the read identification information to the printing device 30 side (the printing device 30, or the printing device 30 and the user PC 40) are also included.

In addition, a printing result obtaining part 108 that obtains the printing result from the printing device 30, and an output identification information processing part 109 that recognizes the identification information in the case where the identification information is used for printing processing onto the can body are also included.

Note that examples of the identification information, which is stored in the identification information storage part 103, to be adopted, include a serial number made up of plural digits, such as more than ten digits, as well as a two-dimensional code and a one-dimensional bar code. In addition, it is also possible to regard an unnumbered dot image as the identification information. A Different piece of identification information can be printed onto each can body, and the piece of identification information can be treated as information capable of uniquely identifying a can body.

The printing device information stored in the identification information storage part 103 is information that can uniquely identify the printing device 30 provided to the user. Examples of the printing device information include the serial number of the printing device 30. For example, a user ID, which is the information that uniquely identifies a user using the printing device 30, can be used.

Note that, instead of printing the different piece of identification information onto each can body, it is also possible to add the same pieces of identification information to the plural can bodies. In other words, this is a mode in which a single piece of identification information includes a predetermined quantity of can bodies. For example, the same identification information is printed for each unit of lot manufactured by the can body manufacturer. It is also possible to use the information such as the manufacturing date as the identification information.

In addition, here, the identification information of the can body is associated with the printing device information to be stored; however, there is also a mode in which the identification information of the can body is stored without being associated with the printing device information. For example, only the identification information that can uniquely identify a can body is stored without administrating the printing device information in some modes.

### [Functional configuration of manufacturer-side device 20 in exemplary embodiment]

Next, a description will be given of the functions in the exemplary embodiment performed by the manufacturer-side device 20. The exemplary embodiment is characterized by the point that the manufacturer-side device 20 performs first printing and processing on the diameter decreased portion of the can body before being provided to the user.

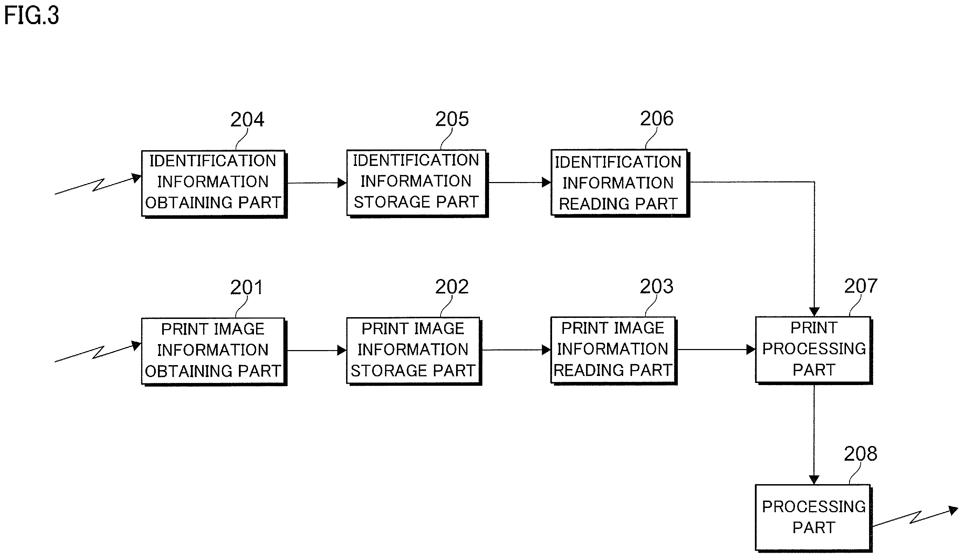

FIG. 3 is a diagram showing a functional configuration of the manufacturer-side device 20 in the exemplary embodiment. The manufacturer-side device 20 includes: a print image information obtaining part 201 that obtains the print image information of an image to be printed onto the can body; and a print image information storage part 202 that stores the obtained print image information in the storage part 26, the database 50, or the like. The print image information obtained by the print image information obtaining part 201 is obtained from the host device 10 in some cases, and is, for example, created on the user side in other cases. There is also a mode to obtain the print image information, which was generated on the host side and then subjected to changing processing on the user side. In addition, the manufacturer-side device 20 includes a print image information reading part 203 that reads the print image information stored in the print image information storage part 202.

Moreover, the manufacturer-side device 20 has a mode to print the identification information onto the diameter decreased portion or the other parts of the can body. For this reason, the manufacturer-side device 20 includes: an identification information obtaining part 204 that obtains the identification information; and an identification information storage part 205 that stores the obtained identification information in the storage part 26. In addition, an identification information reading part 206 that reads the stored identification information is also included.

Moreover, the manufacturer-side device 20 includes a print processing part 207 that prints an image based on the read print image information onto the diameter decreased portion before diameter decreasing processing is applied. The print processing part 207 prints the identification information onto the diameter decreased portion or the other parts of the can body. The print processing part 207 prints the image or the identification information onto the diameter decreased portion before being subjected to the diameter decreasing processing by the digital printing using inkjet, relief offset printing, or the like. In addition, a processing part 208 applies the necking processing to the diameter decreased portion subjected to printing.

### [Functional configuration of printing device 30 side in exemplary embodiment]

Next, a description will be given of the functions in the exemplary embodiment performed on the printing device 30 side (the printing device 30, or the printing device 30 and the user PC 40). The exemplary embodiment is characterized by the point that the printing device 30 performs second printing on the barrel portion of the can body in which the first printing and the processing was performed on the diameter decreased portion by the can body manufacturer side.

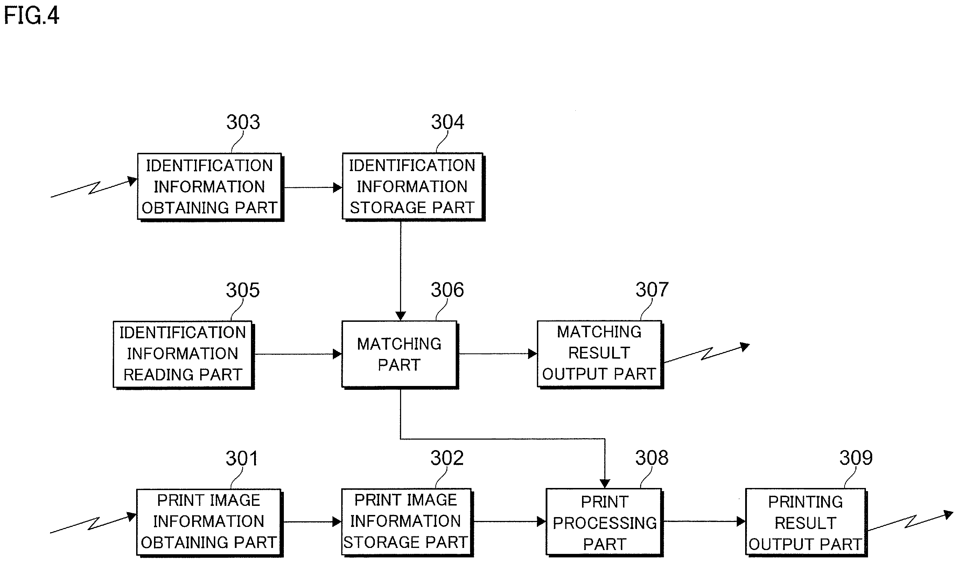

FIG. 4 is a diagram showing a functional configuration on the printing device 30 side in the exemplary embodiment. The printing device 30 side includes: a print image information obtaining part 301 that obtains the print image information; and a print image information storage part 302 that stores the obtained print image information in the storage part 43 of the user PC 40 or the storage part 37 of the printing device 30. The print image information obtained by the print image information obtaining part 301 is obtained from the host device 10 via the network 60 in some cases, and is, for example, created in the user PC 40 in other cases. In addition, there is also a mode in which the user PC 40 performs changing processing on the image obtained from the host device 10, to thereby obtain thereof as the print image information.

Further, in the case where the identification information is printed on the diameter decreased portion or other parts of the can body, the printing device 30 includes: an identification information obtaining part 303 that obtains the identification information from the host device 10 via the network 60; and an identification information storage part 304 that stores the obtained identification information in the storage part 43 of the user PC 40 or the storage part 37 of the printing device 30. In addition, an identification information reading part 305 that reads the identification information attached to the can body by the reading part 33 is also included. Moreover, the printing device 30 side also includes a matching part 306 that matches the identification information read by the identification information reading part 305 against the identification information stored in the identification information storage part 304. Also, a matching result output part 307 that outputs the matching result to the display part 46 of the user PC 40 or an external device, such as the host device 10, via the network 60 is included.

In addition, the printing device 30 side includes a print processing part 308 that reads the print image information out of the print image information storage part 302, and performs processing for causing the printing part 35 to perform printing onto the barrel portion of the can body. Moreover, in the case where matching by the matching part 306 is performed, upon the matching result, the print processing part 308 performs processing for causing the printing part 35 to perform printing onto the barrel portion of the can body. In addition, the printing device 30 includes a printing result output part 309 for outputting the printing results by the print processing part 308 to the host device 10, the display part 46 of the user PC 40, or the like.

### [Processing of host device 10 in exemplary embodiment]

Next, a description will be given of the processing performed by the host device 10 with reference to FIGS. 1, 2, and 5.

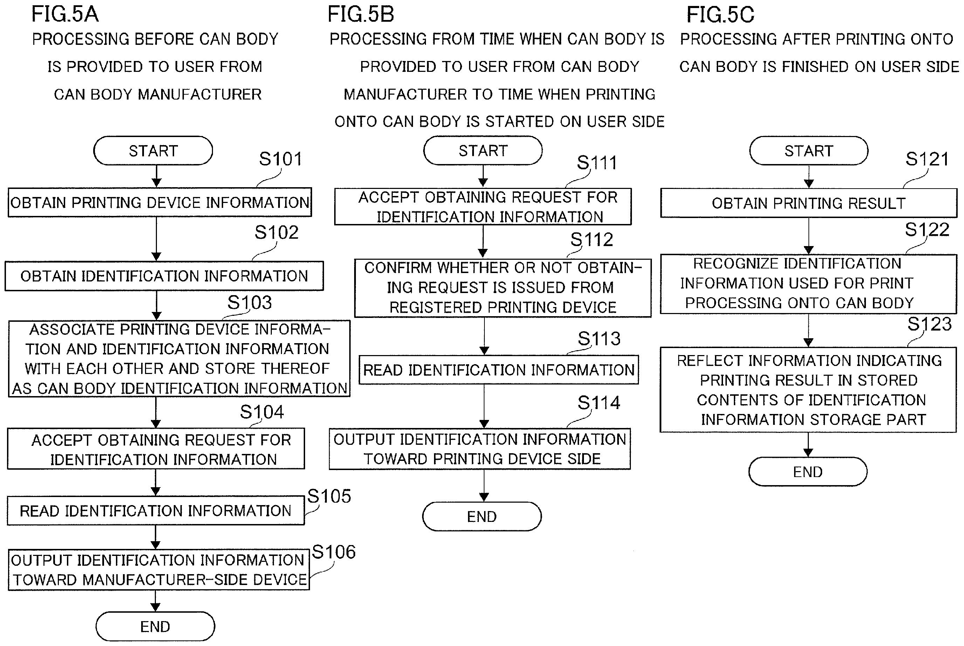

FIGS. 5A to 5C are flowcharts each showing the processing performed by the host device 10. FIG. 5A shows the processing in the host device 10 before the can body is provided to the user from the can body manufacturer. FIG. 5B shows the processing in the host device 10 from the time when the can body is provided to the user from the can body manufacturer to the time when the printing onto the can body is started on the user side. FIG. 5C shows the processing in the host device 10 after the printing on the can body is finished on the user side.

Here, the flowcharts shown in FIGS. 5A and 5B will be described assuming a specific example. In other words, it is assumed that the user in the example is a community-based brewery that produces so-called local beer. The user has collaborated with a local government of the region where the head office is located to provide a can product of local beer (beverage can) as a campaign product for regional revitalization. Then, as a result of consultation between the user and the local government, it has been decided that the user will produce 500 cans of beer in which an image associated with the characteristics of the region is printed on the entire print surface of the can body (the print surface includes the bent surface of the diameter decreased portion). The image to be printed on the can body has been decided to be an image of the urban landscape of the region. Thereafter, the user consulted the company A, which is a can body manufacturer, for the image, and the company A has become responsible for the creation of the image. The company A created the image using the other computer device owned by oneself (not shown), and obtained the approval from the user and the local government with respect to the details thereof.

Under these assumptions, first, as shown in FIG. 5A, the printing device information obtaining part 101 of the host device 10 obtains the printing device information from, for example, another computer device (not shown) owned by a printing device manufacturer (step 101). The identification information obtaining part 102 obtains the identification information (step 102). Specifically, in this example, code information configured with bar codes is obtained as the identification information. In addition, the identification information storage part 103 stores the information associating the obtained printing device information and the obtained identification information with each other, as identification information of the can body provided to the user, in the storage part 13 or the database 50 (step 103). Then, the obtaining request acceptance part 104 accepts the obtaining request for the identification information from the manufacturer-side device 20 (step 104), and the identification information reading part 106 reads the identification information from the identification information storage part 103 (step 105). The identification information output part 107 outputs the read identification information toward the manufacturer-side device 20 (step 106), and the processing is finished. Thereafter, on the can body manufacturer side, printing by the manufacturer-side device 20 is performed on the diameter decreased portion, which is the target of the necking processing, of the straight-shaped can body. Specifically, of the image created by the company A (an image depicting an urban landscape in the target region), an image that is located on the diameter decreased portion (an image depicting clouds floating in the sky) is printed. Further, code information composed of bar codes is printed on the barrel portion of the can body. In addition, the necking processing is applied to the diameter decreased portion on which the printing has been performed. Thereafter, 500 can bodies (actually, a quantity that takes the yield into account), on which printing and processing have partially been performed, are provided from the can body manufacturer to the user.

When the can bodies are provided from the can body manufacturer to the user, as shown in FIG. 5B, the obtaining request acceptance part 104 of the host device 10 accepts the obtaining request for the identification information from the printing device 30 side (step 111). In addition, the obtaining request confirmation part 105 confirms whether or not the obtaining request from the printing device 30 is the obtaining request from the registered printing device 30 based on the printing device information stored in the identification information storage part 103 (step 112). Then, if it is confirmed that the obtaining request is issued from the registered printing device 30, the identification information reading part 106 reads the identification information from the identification information storage part 103 (step 113). The identification information output part 107 outputs the read identification information toward the printing device 30 side (step 114), and the processing is finished. Thereafter, the printing onto the barrel portion of the can body is started on the user side.

When the printing onto the barrel portion of the can body on the user side is finished, as shown in FIG. 5C, the printing result obtaining part 108 of the host device 10 obtains the information indicating the printing result from the printing device 30 side (step 121). In addition, the output identification information processing part 109 recognizes the identification information used for the print processing onto the can body (step 122). Thereafter, the output identification information processing part 109 reflects the information indicating the printing result in the stored contents of the identification information storage part 103 (step 123), and the processing is finished. Note that the reflection in the stored contents performed here is to associate the printing device information of the printing device 30 and the identification information with each other and store thereof with respect to the fact that the printing onto the barrel portion of the can body in the printing device 30 has been finished.

### [Processing in manufacturer-side device 20 in exemplary embodiment]

Next, a description will be given of the processing performed by the manufacturer-side device 20 with reference to FIGS. 1, 3, and 6.

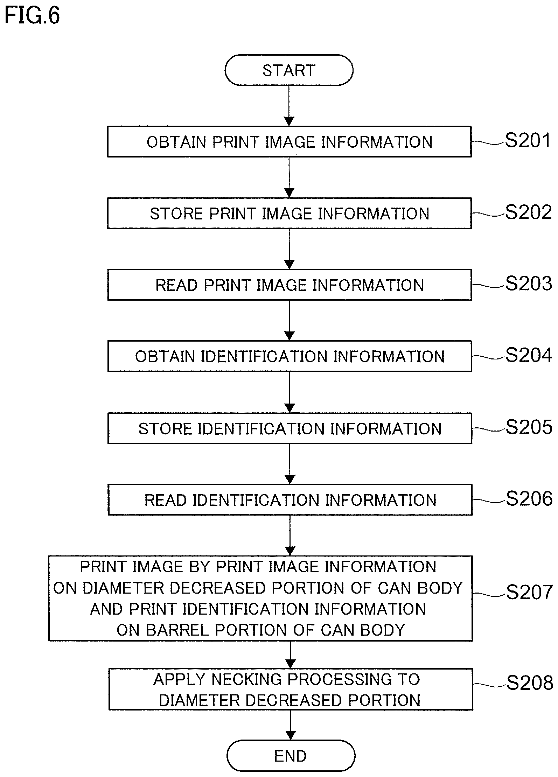

FIG. 6 is a flowchart showing the processing in the exemplary embodiment, which is performed on the manufacturer-side device 20. First, in this example, part of the image created by the company A is printed on the diameter decreased portion of the can body. For this reason, the print image information obtaining part 201 of the manufacturer-side device 20 obtains the print image information of the image to be printed on the diameter decreased portion of the can body from the host device 10 via the network 60 (step 201). In addition, the identification information storage part 202 stores the obtained print image information in the storage part 26 or the database 50 (step 202). The print image information reading part 203 reads the print image information stored by the print image information storage part 202 (step 203).

Moreover, in this example, as the identification information, code information configured with bar codes is printed on the barrel portion of the can body. Consequently, the identification information obtaining part 204 of the manufacturer-side device 20 obtains the identification information from the host device 10 via the network 60 (step 204). Then, the identification information storage part 205 stores the obtained identification information in the storage part 26 (step 205). Thereafter, the identification information reading part 206 reads the identification information that has been stored (step 206). The print processing part 207 prints the image by the read print image information on the diameter decreased portion of the can body, and prints the read identification information on the barrel portion of the can body (step 207). Then, the processing part 208 applies the necking processing to the diameter decreased portion of the can body (step 208), and the processing is finished.

### [Processing of printing device 30 side in exemplary embodiment]

Next, a description will be given of the processing performed by the printing device 30 side using FIGS. 1, 4, and 7.

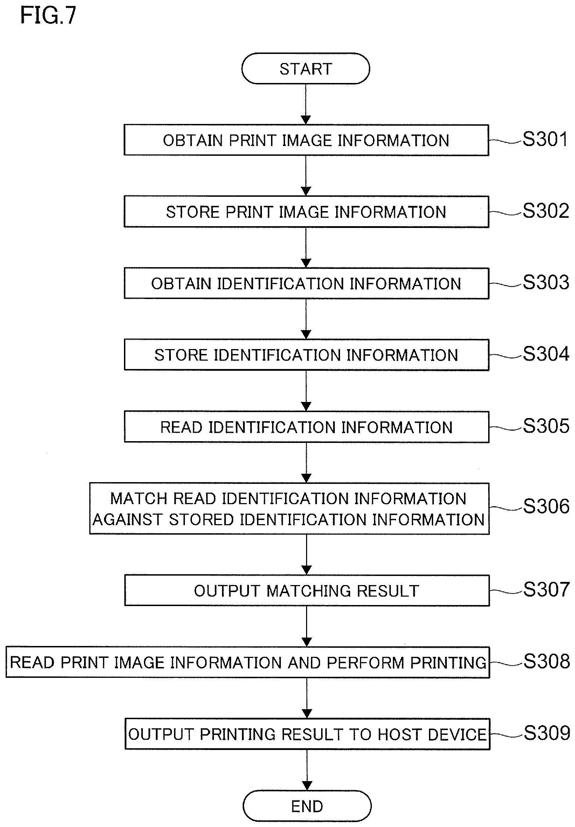

FIG. 7 is a flowchart showing processing in the exemplary embodiment, which is performed on the printing device 30 side. First, the print image information obtaining part 301 obtains the print image information from the host device 10 via the network 60 (step 301). Then, the print image information storage part 302 stores the obtained print image information in the storage part 37 of the printer device 30 or the storage part 43 of the user PC 40 (step 302). In addition, the identification information obtaining part 303 obtains the identification information of the can body from the host device 10 via the network 60 (step 303). Next, the identification information storage part 304 stores the obtained identification information in the storage part 43 of the user PC 40 or the storage part 37 of the printing device 30 (step 304). The identification information reading part 305 reads the identification information, which has been formed by the printing on the can body, by the reading part 33 (step 305). Moreover, the matching part 306 matches the identification information that has been read by the identification information reading part 305 against the identification information stored in the identification information storage part 304 (step 306). The matching result output part 307 outputs the matching result by the matching part 306 to the display part 46 of the user PC 40 or an external device, such as the host device 10, via the network 60 (step 307). The print processing part 308 reads the print image information from the print image information storage part 302, and performs printing by the printing part 35 (step 308). Specifically, of the image created by the company A, part (for example, part of the buildings) other than the part printed on the diameter decreased portion (the image depicting clouds floating in the sky) is printed on the barrel portion of the can body. Thereafter, the printing result output part 309 outputs the printing results to the host device 10 via the communication part 32 and the network 60 (step 309), and the processing is finished.

### [Configuration of can body]

Next, the can body used in the exemplary embodiment, and the can body after the printing is performed will be described based on the above-described example.

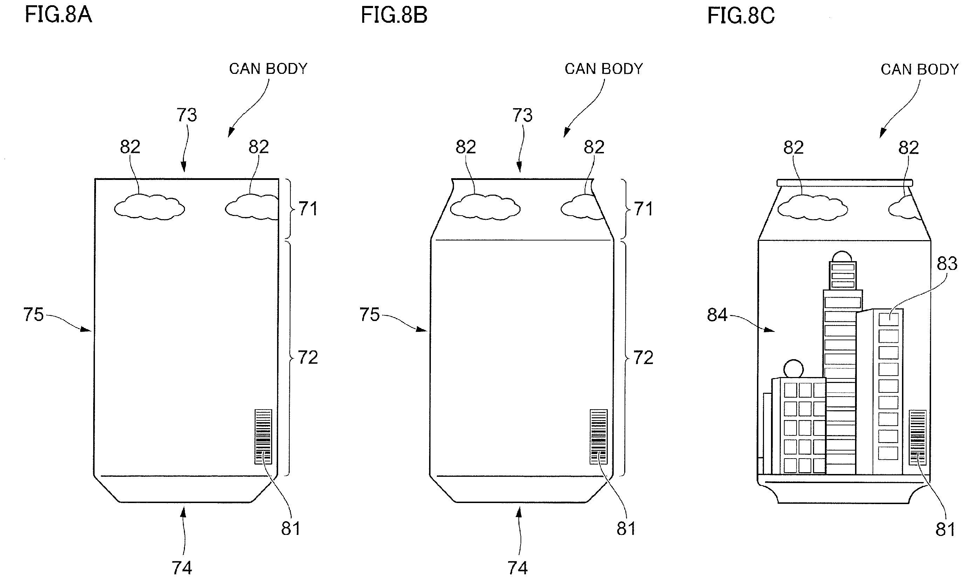

FIGS. 8A to 8C are diagrams each showing an example of the can body to which the exemplary embodiment is applied. FIG. 8A shows an example of the straight-shaped can body after the printing onto the diameter decreased portion 71 by the manufacturer-side device 20 and before the necking processing. FIG. 8B shows an example of the can body after the necking processing by the manufacturer-side device 20 and before the printing by the printing device 30 on the user side. FIG. 8C shows an example of the beverage can as a product, which is filled with a beverage after the printing by the printing device 30.

As shown in FIGS. 8A and 8B, there are the diameter decreased portion 71, the barrel portion 72, the opening portion 73, and the bottom portion 74 in the can body before being completed as a product of the beverage can. Among these, the diameter decreased portion 71 is located closer to the opening portion 73 of the can body, which is subjected to the necking processing.

In the can body shown in FIG. 8A, the image 82 depicting clouds floating in the sky, as an example of the first printing, is printed on the diameter decreased portion 71 by the manufacturer-side device 20. In addition, in the can body shown in FIG. 8A, code information 81 configured with a bar code is printed by the manufacturer-side device 20 on a side, which is closer to the bottom portion 74, in the barrel portion 72 on the outer circumferential surface 75 to be longitudinal in the axial direction. The code information 81 can be printed at the same time as the image 82 is printed on the diameter decreased portion 71 by the printing part 23 of the manufacturer-side device 20. The code information 81 formed in this way is read by the reading part 33 of the printing device 30 as one of the pieces of identification information. The diameter decreased portion 71 of the can body shown in FIG. 8A has the same diameter as the outer diameter of the barrel portion 72, and the surface thereof has not yet been bent; accordingly, the entire can body has a straight shape. In the exemplary embodiment, in the manufacturer-side device 20, the image 82 is formed on the diameter decreased portion 71 as well as the code information 81 to be distinguished from others is formed.

The can body shown in FIG. 8B is a can body in which the first printing as shown in FIG. 8A has been printed by the manufacturer-side device 20 on the diameter decreased portion 71 before applying the deformation processing, and thereafter, the portion has been deformed and subjected to the necking processing by the manufacturer-side device 20. Due to the necking processing, the diameter decreased portion 71 is deformed so that the outer diameter gradually decreases as approaching the opening portion 73, and thereby the surface of the diameter decreased portion 71 is bent. On the other hand, the barrel portion 72 of the can body is formed cylindrically to constitute the main part of the outer circumferential surface 75 of the can body, and therefore it is possible to perform the second printing by digital printing on the user side. In the exemplary embodiment, the can body in the state shown in FIG. 8B is provided, for example, from the can body manufacturer side where the manufacturer-side device 20 is installed to the user side where the printing device 30 is installed.

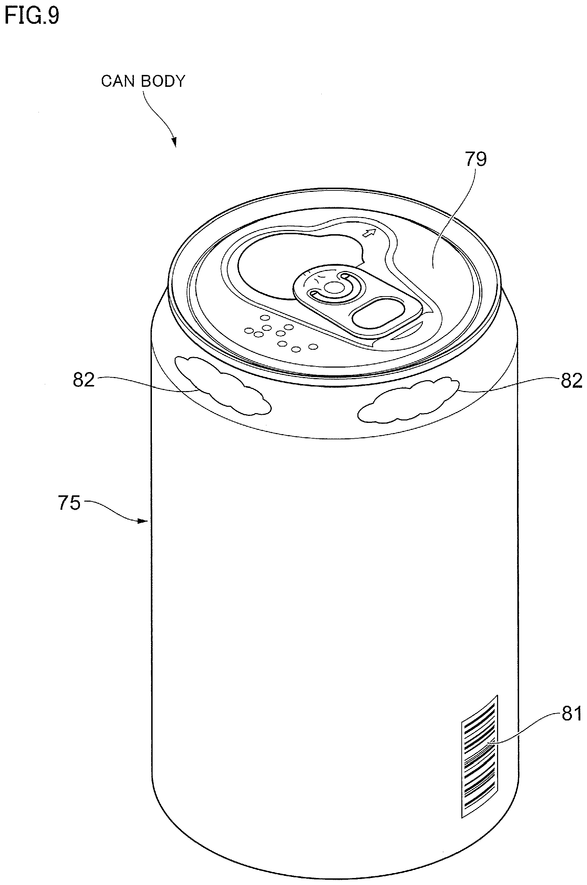

The can body as the product shown in FIG. 8C has been subjected to the second printing by the printing device 30 on the barrel portion 72 of the can body shown in FIG. 8B on the user side, and thereafter, filled with alcoholic beverages such as beer or Chuhai, or soft drinks (non-alcoholic beverages) from the opening portion 73 of the can body shown in FIG. 8B. After the beverage is filled, the lid member is attached to the opening portion 73 of the can body by flanging processing (processing of forming a flange for attaching the lid member). This completes a beverage can shown in FIG. 8C filled with the beverage. Note that the can body as the product shown in FIG. 8C also has a mode in which the second printing is performed by the printer device 30 on the barrel portion of the can body shown in FIG. 9 to be described later.

In the can body as the product of the beverage can shown in FIG. 8C, the image 83 depicting buildings, as an example of the second printing, is printed on the barrel portion 72 by the printing device 30 on the user side as described above. In the example shown in FIG. 8C, the image 82 (the image depicting clouds floating in the sky) printed on the diameter decreased portion on the manufacturer side is associated with the image 83 (the image depicting buildings) printed on the barrel portion 72 on the user side to constitute a series of images 84 making sense. In other words, regarding the can body finally subjected to the second printing on the user side to be productized, in light of the difficulty of performing the deformation processing on the user side, it is possible to perform the first printing on the portion to be deformed on the manufacturer side, not the user side, and integrate the first printing and the second printing as a design.

Note that, in the example shown in FIGS. 8A to 8C, the printing device 30 prints part of the image 84 on the can body before being filled with the beverage, but there is also a mode in which part of the image 84 is printed on the can body that has been filled with the beverage.

FIG. 9 is a diagram showing an example in which printing is performed onto a can body after being filled with a beverage. The can body shown in FIG. 9 has already been filled with the beverage, and the lid member 79 has been attached thereto by the flanging processing. The image 82 is printed on part of the diameter decreased portion of the can body shown in FIG. 9. In addition, the code information 81 as the identification information is printed on part of the barrel portion of the can body.

The example of the can body shown in FIG. 9 is, for example, the case where the user is other than a beverage manufacturer, such as a beer company. In this case, the image printing (the first printing) and the necking processing are performed onto the diameter decreased portion 71 of the can body on the can body manufacturer side, and thereafter, the can body is provided to the beverage manufacturer. Then, the can body is filled with the beverage by the beverage manufacturer, and provided to the user side. Thereafter, by use of the inkjet digital printing device, etc., the second printing is performed on the barrel portion 72 on the user side. Examples of the user who receive the can bodies in such forms (the can bodies filled with the beverage, but with imperfect printed images) include event companies, hotels, retailers such as major supermarkets, department stores, or convenience stores, and platformers that provide services over the Internet.

Note that, in the examples shown in FIGS. 8A to 8C, and 9, the image 82 is printed on the diameter decreased portion 71, and the code information 81 is printed on part of the barrel portion of the can body; however, there is also a mode in which both the image 82 and the code information 81, or only the code information 81 is printed on the diameter decreased portion 71.

As described in detail above, according to the exemplary embodiment, the can body that has already been subjected to the first printing and the necking processing onto the diameter decreased portion with the print surface that has already been bent is to be subjected to the second printing by the printing device 30. This makes it possible to obtain the intended print quality even if the printing onto the can body is performed by the user.

### Reference Signs List

1 Can body printing system
10 Host device
20 Manufacturer-side device
21 Control part
22 Communication part
23 Printing part
24 Processing part
30 Printing device
31 Control part
32 Communication part
33 Reading part
34 Support part
35 Printing part
40 User PC
41 Control part
42 Memory
43 Storage part
44 Communication part
45 Operation part

## Claims

1. A can body printing system (1) comprising:
a first printing unit (20) performing first printing to form an image or an identification information on a predetermined area of a can body;
a deformation unit deforming the area after the first printing; and
a second printing unit (30), after the deformation of the area, performing second printing by digital printing on a barrel portion provided contiguous to the area subjected to the first printing and the deformation.

2. The can body printing system according to claim 1, wherein
the predetermined area is a diameter decreased portion of the can body.

3. The can body printing system according to claim 1, wherein the first printing unit performs printing on the area or a location other than the area to form the identification information on the can body.

## Patentansprüche

1. Dosenkörperbedrucksystem (1), umfassend:
eine erste Druckeinheit (20), die ein erstes Drucken durchführt, um ein Bild oder eine Identifikationsinformation auf einem vorbestimmten Bereich eines Dosenkörpers zu erzeugen;
eine Verformungseinheit, die den Bereich nach dem ersten Druck verformt; und
eine zweite Druckeinheit (30), die nach der Verformung des Bereichs einen zweiten Druck durch Digitaldruck auf einem Tonnenabschnitt durchführt, der angrenzend an den Bereich vorgesehen ist, der dem ersten Druck und der Verformung unterzogen wurde.

2. Dosenkörperbedrucksystem nach Anspruch 1, wobei der vorbestimmte Bereich ein im Durchmesser verringerter Abschnitt des Dosenkörpers ist.

3. Dosenkörperbedrucksystem nach Anspruch 1, wobei die erste Druckeinheit den Bereich oder eine andere Stelle als den Bereich bedruckt, um die Identifikationsinformationen auf dem Dosenkörper zu bilden.

## Revendications

1. Système (1) d'impression de corps de canette comprenant :
une première unité (20) d'impression effectuant une première impression pour former une image ou une information d'identification sur une zone prédéterminée d'un corps de canette ;
une unité de déformation déformant la zone après la première impression ; et
une seconde unité (30) d'impression, après la déformation de la zone, effectuant une seconde impression par impression numérique sur une partie cylindre prévue contiguë à la zone soumise à la première impression et à la déformation.

2. Système d'impression de corps de canette selon la revendication 1, dans lequel
la zone prédéterminée est une partie à diamètre réduit du corps de canette.

3. Système d'impression de corps de canette selon la revendication 1, dans lequel la première unité d'impression effectue une impression sur la zone ou un emplacement autre que la zone pour former l'information d'identification sur le corps de canette.
